# NEUE EUROPÄISCHE PATENTSCHRIFT

(11) **EP 2 881 642 B2**
(45) Veröffentlichungstag und Bekanntmachung des Hinweises auf die Entscheidung über den Einspruch: **22.05.2024**
(45) Hinweis auf die Patenterteilung: 18.09.2019
(21) Anmeldenummer: 14193204.6
(22) Anmeldetag: 14.11.2014
(51) Int. Cl.: F16L 55/115, B65D 41/22

(54) **Schutzkappe**
Protection cap
Couvercle de protection

(30) Priorität: 04.12.2013 DE 102013224918
(43) Veröffentlichungstag der Anmeldung: 10.06.2015
(73) Patentinhaber: Schaeffler Technologies AG & Co. KG, 91074 Herzogenaurach (DE)
(72) Erfinder: Sester, Christof, 77723 Gengenbach (DE); Noll, Dominik, 77652 Offenburg (DE)

(56) Entgegenhaltungen:
- EP-A1- 0 203 099
- EP-A1- 2 006 594
- EP-A2- 2 657 586
- DE-C2- 19 716 473
- US-A- 4 046 276
- US-A- 4 779 997
- US-A- 5 385 253

## Beschreibung

Die Erfindung betrifft eine hydraulische Ausrückvorrichtung für eine Reibungskupplung eines Kraftfahrzeugs mit einer Schutzkappe für einen flüssigkeitsführenden Verbindungsanschluss, insbesondere in einer Kupplungsglocke eingesetzten Ausrückvorrichtung, wobei die Schutzkappe zumindest einen mit dem Verbindungsanschluss zusammenwirkenden Befestigungsbereich aufweist.

Die Druckschrift DE 197 16 473 C2 zeigt eine solche hydraulische Ausrückvorrichtung in Form eines Zentralausrückers für eine Reibungskupplung.

Um hydraulische Leitungen vor Kontamination während des Transportes und der Montage/Demontage zu schützen, werden Schutzkappen auf die Verbindungsanschlüsse des hydraulischen Systems - meist kraftschlüssig - aufgesetzt. Die Schutzkappen verhindern einerseits den Austritt von Flüssigkeit und andererseits das Eindringen von Schmutzpartikel in das System. Bei dem endgültigen Verbau des Systems an dem jeweiligen Bestimmungsort wird die Schutzkappe von dem Verbindungsanschluss abgenommen, um diesen beispielsweise mit einer weiterführenden Leitung zu verbinden. Zur Vermeidung von Flüssigkeitsaustritt und zur Vermeidung des Eindringens von Schmutzpartikeln in das System muss die Schutzkappe dabei kontrolliert unmittelbar vor der Montage bzw. der Verbindung des Verbindungsanschlusses mit dem System abgenommen werden. Eine solche Schmutzkappe ist in der Druckschrift EP 2 657 586 A2 beschrieben, wobei die Schmutzkappe eine Art Stopfen aufweist, der in eine hydraulische Leitung bzw. einen Konnektor geschoben wird, sowie eine Kappe aufweist, die radial außerhalb der Leitung bzw. des Konnektors anliegt. An schwer zugänglichen Stellen ist ein Zugriff auf die Schutzkappen häufig nicht zu realisieren.

Die DE 10 2010 043 438 A1 beschreibt beispielsweise eine Schutzkappe für einen flüssigkeitsführenden Verbindungsanschluss eines hydraulischen Systems, die neben einer relativ schwachen kraftschlüssigen Verbindung zur Absicherung der nötigen Dichtheit noch eine lösbar formschlüssige Verbindung zwischen einem Befestigungsbereich der Schutzkappe und dem Verbindungsanschluss vorsieht. Zu diesem Zweck ist ein Teilabschnitt des Befestigungsbereichs als zumindest ein Gewindegang ausgebildet. Die mittels Gewinde bei der Montage auf- bzw. bei der Demontage vom Verbindungsverschluss abdrehbar ausgebildete Schutzkappe benötigt zwar wenig Platz. Allerdings ist sie bei sehr begrenztem radialen Bauraum, wie er beispielsweise in einer Kupplungsglocke einer Reibungskupplung eines Kraftfahrzeuges besteht, nicht einsetzbar. Hier ist in radialer Richtung zu wenig Platz für einen manuellen oder maschinellen Zugriff auf die Schutzkappe vorhanden, um sie auf den Verbindungsanschluss aufzuschrauben bzw. bei der Demontage abzuschrauben.

Allgemein bekannt sind auch Schutzkappen mit seitlich angeordneten Laschen. Hier trifft das gleiche zu, wie auf die weiter oben beschriebene Schutzkappe des Standes der Technik. Sie beanspruchen zwar im montierten Zustand wenig Platz, sind aber auf engstem Raum schwer oder gar nicht demontierbar. So ist mit den bekannten Schutzkappen bei Systemmontagen von Kupplungsausrückvorrichtungen in Kupplungsglocken aufgrund des sehr engen Bauraumes und der sehr begrenzten Bauteilabstände ein Zugriff von außen nicht realisierbar.

Die Aufgabe der Erfindung besteht deshalb darin, eine hydraulische Ausrückvorrichtung für eine Reibungskupplung eines Kraftfahrzeugs mit einer Schutzkappe für einen flüssigkeitsführenden Verbindungsanschluss, insbesondere einer hydraulisch betätigten und in einer Kupplungsglocke eingesetzten Ausrückvorrichtung , zu schaffen, die auf engstem Raum eine leichte Montage/Demontage ermöglicht und zumindest gegenüber niedrigen Drücken eine gute Abdichtung gewährleistet.

Die Aufgabe wird mit den Merkmalen des ersten Anspruchs gelöst. Vorteilhafte Ausgestaltungen ergeben sich aus den Unteransprüchen.

Bei einer hydraulischen Ausrückvorrichtung für eine Reibungskupplung eines Kraftfahrzeugswird eine Schutzkappe für einen flüssigkeitsführenden Verbindungsanschluss vorgesehen, wobei die Schutzkappe zumindest einen mit dem Verbindungsanschluss zusammenwirkenden Befestigungsbereich aufweist, wobei sich an den Befestigungsbereich auf der dem Verbindungsanschluss abgewandten Seite ein elastisch biegbarer, federnder Griffbereich anschließt, welcher bei Vorhandensein eines mechanischen Widerstandes seitlich federnd umlegbar und bei Wegfall des Widerstandes in seine Ausgangsstellung aufrichtbar ist und wobei der aus einem sich in Richtung einer Längsachse an den Befestigungsbereich anschließenden Schaft und einem an dem Ende des Schaftes ausgebildeten Kopfstück bestehende Griffbereich um einen Kippwinkel in Bezug auf die Längsachse federnd kippbar ist und der Schaft einen gegenüber dem Durchmesser des Befestigungsbereiches stark verminderten Durchmesser aufweist.

Vorzugsweise besteht zumindest der Schaft aus einem elastischen Kunststoffmaterial.

Eine axiale Länge des Griffbereiches ist hierbei vorzugsweise um ein Mehrfaches größer als der Durchmesser des Schaftes.

Das Kopfstück weist einen durch eine Durchmessererweiterung des Schaftes gebildeten Durchmesser auf.

Erfindungsgemäß weist der Befestigungsbereich an seiner dem Verbindungsanschluss zugewandten Seite Mittel auf, die der Abdichtung dienen.

Vorzugsweise ist die Schutzkappe rotationssymmetrisch ausgebildet.

In vorteilhafter Weise sind der Befestigungsbereich und der Griffbereich einstückig aus einem elastischen Kunststoffmaterial hergestellt. Der Befestigungsbereich und der Griffbereich können aber auch aus unterschiedlichem Material bestehen.

Die Erfindung wird nachfolgend anhand eines Ausführungsbeispiels und zugehöriger Zeichnungen näher erläutert. Es zeigen:
Fig. 1 eine schematische Darstellung einer Schutzkappe in einer Vorderansicht,
Fig. 2 eine dreidimensionale Darstellung eines Ausschnittes einer Kupplungsglocke mit montierten Schutzkappen,
Fig. 3 eine schematische Schnittdarstellung der Kupplungsglocke nach Fig. 2 bei der Montage des mit der Schutzkappe versehenen Verbindungsanschlusses.

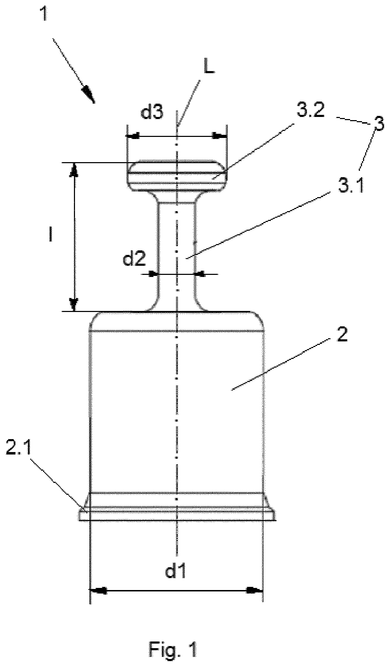

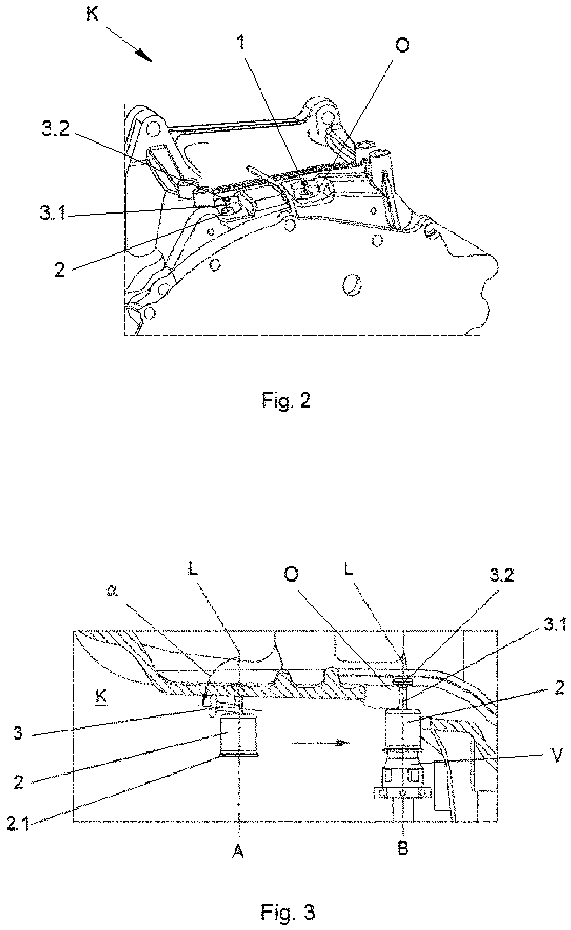

In Fig. 1 ist eine Schutzkappe 1 in einer schematischen Darstellung gezeigt. Die Schutzkappe 1 ist beispielsweise in einer Kupplungsglocke K einer Reibungskupplung eines Kraftfahrzeuges einsetzbar und dient dem abdichtenden Verschließen eines flüssigkeitsführenden Verbindungsanschlusses V einer Ausrückvorrichtung während des Transportes und/oder der Montage/Demontage.
Dieses Einsatzgebiet der Schutzkappe 1 ist in Fig. 2 und Fig. 3 dargestellt. Dabei ist die Anwendung der Schutzkappe 1 nicht auf das beschriebene Gebiet beschränkt.

Die Schutzkappe 1 stellt vorzugsweise ein aus einem elastischen Kunststoff gefertigtes, rotationssymmetrisches Bauteil dar, welches aus einem topfförmig ausgebildeten Befestigungsbereich 2 und einem Griffbereich 3 besteht. Der Griffbereich 3 umfasst einen Schaft 3.1 und ein Kopfstück 3.2, wobei der sich in Richtung einer Längsachse L erstreckende Schaft 3.1 eine Verbindung zwischen Befestigungsbereich 2 und dem Kopfstück 3.2 realisiert. Dabei besitzt der durch eine starke Durchmesserverringerung gegenüber dem einen Durchmesser d1 aufweisenden Befestigungsbereich 2 gebildete Schaft 3.1 einen in Bezug auf eine axiale Länge l des Griffbereiches 3 relativ kleinen Durchmesser d2. Das vorzugsweise mit einer abgeflachten Stirnseite ausgebildete Kopfstück 3.2 weist gegenüber dem Schaft 3.1 wieder einen etwas größeren Durchmesser d3 auf.

Bei der Verwendung eines elastischen, federnd nachgiebigen Kunststoffmaterials - zumindest für den Schaft 3.1 - weist der Griffbereich 3 mit der Geometrie eine Kippfähigkeit um die Längsachse L in Verbindung mit einer elastischen Rückstellfähigkeit in Richtung der Längsachse L auf.

Der Befestigungsbereich 2 besitzt auf seiner dem Griffbereich 3 abgewandten offenen Seite einen umlaufenden Flansch 2.1, dessen Anordnung hier beispielhaft angeführt ist für den Einsatz weiterer Mittel zur Abdichtung gegenüber zumindest niedrigen Drücken, die während des Transportes und/oder während der Montage/Demontage an dem Verbindungsanschluss V (s. Fig. 3) anliegen können. Derartige Mittel sind eine dichtlippenförmige Ausbildung des Flansches 2.1. Zudem erleichtert der Flansch 2.1 auch ein Montieren (Überstülpen) der Schutzkappe 1 auf den Verbindungsanschluss V. Der Durchmesser d1 des im Wesentlichen zylindrisch ausgebildeten und vorzugsweise aus einem elastischen Material gefertigten Befestigungsbereichs 2 ist dabei so gewählt, dass er in etwa dem Durchmesser des zu verschließenden Verbindungsanschlusses V entspricht bzw. minimal größer ist.

Die Fig. 2 zeigt den Einsatz der Schutzkappe 1 in der Kupplungsglocke K. Dabei sind hier zwei Schutzkappen 1 angedeutet, welche auf hier nicht gezeigten Verbindungsanschlüssen V befestigt sind und jeweils aus einer Öffnung O der Kupplungsglocke K herausschauen. Um eine Verbindung mit einer weiterführenden Leitung bzw. einem Anschlussteil (nicht gezeigt) außerhalb der Kupplungsglocke K zu verwirklichen, muss die Schutzkappe 1 entfernt werden. Das lässt sich einfach durchführen, da die Geometrie des Griffbereichs 3 - mit dem schmalen Schaft 3.1 und dem darauf sitzenden Kopfstück 3.2 - eine gute Handhabung ermöglicht, das heißt, das Kopfstück 3.2 ist sowohl manuell als auch maschinell gut greifbar und somit die Schutzkappe 1 leicht demontierbar.

In Fig. 3 ist die Schutzkappe 1 während der Montage der Ausrückvorrichtung in der Kupplungsglocke K dargestellt. Bekanntermaßen wird die komplette Ausrückvorrichtung (hier nicht gezeigt) mit zugehörigem Verbindungsanschluss V als vormontierte Einheit axial in die Kupplungsglocke K eingebracht. Der Verbindungsanschluss V befindet sich auf einer hier nicht näher gezeigten Druckleitung, welche einen radialen Abstand zwischen der Ausrückvorrichtung und der Kupplungsglocke K überbrückt. Während dieses Montageschrittes und bis zur Verbindung mit einem sich außerhalb der Kupplungsglocke K nahe der Öffnung O befindenden Anschlussteil (nicht dargestellt) muss die Leitung bzw. der Verbindungsanschluss V mittels der Schutzkappe 1 verschlossen bleiben. Auch bei der Demontage des gesamten Systems muss nach dem Trennen von dem Anschlussteil der sich in der Kupplungsglocke K befindende Verbindungsanschluss V wieder durch die Schutzkappe 1 verschlossen werden, um eine Kontamination zu vermeiden. Das bedeutet, dass der Verbindungsanschluss V mit darauf befestigter Schutzkappe 1 bei der Montage des Systems/der Ausrückvorrichtung bei stark begrenztem radialen Bauraum in der Kupplungsglocke K zu der Öffnung O hin und bei der Demontage von der Öffnung wegbewegt werden muss.

In Fig. 3 ist zur Erläuterung der Wirkungsweise der Schutzkappe 1 eine Bewegung des Verbindungsanschlusses V in der Kupplungsglocke K von einer Position A nach einer Position B dargestellt. Die Montagerichtung ist durch den Pfeil verdeutlicht.
(Zur Vereinfachung der Darstellung ist in der Position A der Verbindungsanschluss V nicht gezeigt.) In der Position B befindet sich der Verbindungsanschluss V mit der Schutzkappe 1 in einer der Öffnung O der Kupplungsglocke K zugeordneten Endstellung, in welcher die Schutzkappe 1 von dem Verbindungsanschluss V entfernt und dieser mit dem hier nicht gezeigten, außerhalb der Kupplungsglocke K angeordneten, Anschlussteil verbunden werden kann.

Um von der Position A zu der Position B zu gelangen, muss die sich auf dem Verbindungsanschluss V befindende Schutzkappe 1 entlang einer die radiale Bauraumbegrenzung darstellende Kupplungsglockenwand bewegt werden, die sich in einem Abstand zu dem Befestigungsbereich 2 der Schutzkappe 1 befindet, welcher kleiner ist als die axiale Länge l des Griffbereiches 3. Aufgrund der elastischen Biegbarkeit des Griffbereichs 3 der Schutzkappe 1 legt sich der Schaft 3.1 mit dem Kopfstück 3.2 zumindest teilweise - in Abhängigkeit von dem Abstand zur Kupplungsglockenwand - seitlich federnd um, sobald die radiale Bauraumbegrenzung als mechanischer Widerstand bzw. Hindernis vorhanden ist.

In Fig. 3 ist das seitliche, von der Längsachse L weggerichtete, Umlegen als Kippwinkel α dargestellt. Die Größe des Kippwinkels α, das heißt, wie weit der Griffbereich 3 aus der aufrechten, in Richtung der Längsachse L gerichteten, Ausgangsstellung in eine seitliche Ausweichstellung umkippt, hängt zum einen von den Abmessungen der Schutzkappe 1 und zum anderen von dem radialen Bauraum (Abstand) in der Kupplungsglocke K ab. Ist beispielsweise mehr Platz für die Schutzkappe 1 vorhanden, muss der Griffbereich 3 sich nur in einem kleineren Kippwinkel α zur Seite neigen als bei einem engbegrenzten Bauraum.

Bei der weiteren Bewegung der Schutzkappe 1 (mit dem Verbindungsanschluss V) in Richtung des Pfeils gelangt die Schutzkappe 1 an die der Öffnung O gegenüberliegende Position B. Dadurch hat sich der radiale Bauraum vergrößert und der Griffbereich 3 (Schaft 3.1 mit dem Kopfstück 3.2) kann sich aufgrund seiner federnd elastischen Ausbildung wieder in Richtung der Längsachse L aufrichten. Jetzt befindet sich die Schutzkappe 1 in der in Fig. 2 gezeigten Stellung, bei welcher das Kopfstück 3.2 aus der Öffnung O schaut und damit leicht zu handhaben bzw. zu demontieren ist. Das trifft auch umgekehrt auf die Trennung des Systems von dem außerhalb der Kupplungsglocke K befindlichen Anschlussteil zu, wobei die Schutzkappe 1 wieder auf den Verbindungsanschluss V aufgesetzt bzw. montiert werden muss.

So ermöglicht die Ausbildung der Schutzkappe 1 - hier insbesondere des Kopfstücks 3.2 - eine gute Handhabung bei deren manuellen oder maschinellen Montage.
Insbesondere die Ausbildung des Schaftes 3.1 ermöglicht (in Zusammenwirken mit dem elastischen Material) ein federnd nachgiebiges Umlegen und wieder Aufrichten. Durch eine festigkeitsoptimierte Ausbildung des Griffbereichs 3 (Schaft 3.1 und Kopfstück 3.2) können zudem Demontagekräfte besser aufgenommen werden. Außerdem gewährleistet die Ausbildung der Schutzkappe 1 - hier insbesondere des Befestigungsbereichs 2 - eine gute Abdichtung der Leitung gegenüber kleinen Drücken. Da die Schutzkappe 1 ein rotationssymmetrisches Teil darstellt, ist keine Montageorientierung notwendig, wodurch sich die Montage der Schutzkappe 1 erleichtert.

Vorzugsweise ist die Schutzkappe einstückig aus einem elastischen Kunststoffmaterial gefertigt. Es ist aber auch eine zumindest zweistückige Fertigung möglich, die eine getrennte Herstellung von Befestigungsbereich 2 und Griffbereich 3 vorsieht und auch unterschiedliches Material für beide Bereiche verwendet.
Die Verwendung eines elastisch nachgiebigen Kunststoffs, vor allem aber die Ausbildung der Schutzkappe 1, insbesondere des Griffbereichs 3, ermöglichen ein sich von der Längsachse L Wegbiegen des Griffbereichs 3 bei geringstem mechanischen Widerstand bzw. ein selbständiges Wiederaufrichten bei Nachlassen des Widerstandes.

### Bezugszeichenliste

- 1: Schutzkappe
- 2: Befestigungsbereich
- 2.1: Mittel zur Abdichtung und/oder Befestigung, Flansch
- 3: Griffbereich
- 3.1: Schaft
- 3.2: Kopfstück
- A: erste Position
- B: zweite Position
- d1: Durchmesser (Befestigungsbereich)
- d2: Durchmesser (Schaft)
- d3: Durchmesser (Kopfstück)
- K: Kupplungsglocke
- L: Längsachse
- I: axiale Länge
- O: Öffnung in Kupplungsglocke
- V: Verbindungsanschluss
- α: Kippwinkel

## Patentansprüche

1. Hydraulische Ausrückvorrichtung für eine Reibungskupplung eines Kraftfahrzeugs, **gekennzeichnet durch** eine Schutzkappe (1) für einen flüssigkeitsführenden Verbindungsanschluss (V), die zumindest einen mit dem Verbindungsanschluss (V) zusammenwirkenden Befestigungsbereich (2) aufweist, wobei sich an den Befestigungsbereich (2) auf der dem Verbindungsanschluss (V) abgewandten Seite ein elastisch biegbarer, federnder Griffbereich (3) anschließt, welcher bei Vorhandensein eines mechanischen Widerstandes seitlich federnd umlegbar und bei Wegfall des Widerstandes in seine Ausgangsstellung aufrichtbar ist und wobei der aus einem sich in Richtung einer Längsachse (L) an den Befestigungsbereich (2) anschließenden Schaft (3.1) und einem an dem Ende des Schaftes (3.1) ausgebildeten Kopfstück (3.2) bestehende Griffbereich (3) um einen Kippwinkel (α) in Bezug auf die Längsachse (L) federnd kippbar ist und der Schaft (3.1) einen gegenüber dem Durchmesser (d1) des Befestigungsbereiches (2) stark verminderten Durchmesser (d2) aufweist, und wobei der Befestigungsbereich (2) an seiner dem Verbindungsanschluss (V) zugewandten Seite Mittel (2.1) aufweist, die der Abdichtung dienen, wobei die Mittel einen am Befestigungsbereich (2) auf dessen dem Griffbereich (3) abgewandten offenen Seite einen dichtlippenförmigen umlaufenden Flansch (2.1) umfassen.

2. Hydraulische Ausrückvorrichtung nach Anspruch 1, **dadurch gekennzeichnet, dass** zumindest der Schaft (3.1) aus einem elastischen Kunststoffmaterial besteht.

3. Hydraulische Ausrückvorrichtung nach Anspruch 1 oder 2, **dadurch gekennzeichnet, dass** eine axiale Länge (l) des Griffbereiches (3) um ein Mehrfaches größer ist als der Durchmesser (d2) des Schaftes (3.1).

4. Hydraulische Ausrückvorrichtung nach einem der Ansprüche 1 bis 3, **dadurch gekennzeichnet, dass** das Kopfstück (3.2) einen durch eine Durchmessererweiterung des Schaftes (3.1) gebildeten Durchmesser (d3) aufweist.

5. Hydraulische Ausrückvorrichtung nach einem der Ansprüche 1 bis 4, **dadurch gekennzeichnet, dass** die Schutzkappe (1) rotationssymmetrisch ausgebildet ist.

6. Hydraulische Ausrückvorrichtung nach einem der Ansprüche 1 bis 5, **dadurch gekennzeichnet, dass** der Befestigungsbereich (2) und der Griffbereich (3) aus unterschiedlichem Material bestehen.

7. Hydraulische Ausrückvorrichtung nach einem der Ansprüche 1 bis 6, **dadurch gekennzeichnet, dass** der Befestigungsbereich (2) und der Griffbereich (3) einstückig aus einem elastischen Kunststoffmaterial hergestellt sind.

## Claims

1. A hydraulic disengagement device for a friction clutch of a motor vehicle, **characterized by** a protective cap (1) for a liquid-conducting connection port (V), which protective cap has at least one fastening region (2) which interacts with the connection port (V), wherein the fastening region (2) is adjoined on the side facing away from the connection port (V) by an elastically bendable, resilient handle region (3) which can be resiliently turned over to the side in the presence of a mechanical resistance and can be straightened up into its initial position upon discontinuation of the resistance, and wherein the handle region (3), which consists of a stem (3.1) adjoining the fastening region (2) in the direction of a longitudinal axis (L) and of a head piece (3.2) formed on the end of the stem (3.1), can be resiliently tilted through a tilting angle (α) with respect to the longitudinal axis (L), and the stem (3.1) has a diameter (d2) which is greatly reduced by comparison with the diameter (d1) of the fastening region (2), and wherein the fastening region (2) has means (2.1) at its side facing the connecting port (V) which serve to seal it, wherein the means comprise a sealing lip-shaped circumferential flange (2.1) on the fastening region (2) on its open side facing away from the handle region (3).

2. The hydraulic disengagement device according to claim 1, **characterized in that** at least the stem (3.1) consists of an elastic plastics material.

3. The hydraulic disengagement device according to claim 1 or 2, **characterized in that** an axial length (1) of the handle region (3) is greater by a multiple than the diameter (d2) of the stem (3.1).

4. The hydraulic disengagement device according to one of claims 1 to 3, **characterized in that** the head piece (3.2) has a diameter (d3) which is formed by a diameter widening of the stem (3.1).

5. The hydraulic disengagement device according to one of claims 1 to 4, **characterized in that** the protective cap (1) has a rotationally symmetrical design.

6. The hydraulic disengagement device according to one of claims 1 to 5, **characterized in that** the fastening region (2) and the handle region (3) consist of different materials.

7. The hydraulic disengagement device according to one of claims 1 to 6, **characterized in that** the fastening region (2) and the handle region (3) are produced in one piece from an elastic plastics material.

## Revendications

1. Dispositif de désaccouplement hydraulique destiné à un embrayage à friction d'un véhicule automobile, **caractérisé par** un capuchon de protection (1) destiné à un raccord de liaison (V) de guidage de fluide qui comporte au moins une région de fixation (2) coopérant avec le raccord de liaison (V), une région de préhension élastique (3), pliable élastiquement, étant raccordée à la région de fixation (2) du côté opposé au raccord de liaison (V), laquelle région de préhension peut être déviée latéralement de manière élastique en présence d'une résistance mécanique et peut reprendre sa position initiale lorsque la résistance est supprimée, et la région de préhension (3) qui comprend un tige (3.1) se raccordant à la région de fixation (2) dans la direction d'un axe longitudinal (L) et une pièce de tête (3.2) formée à l'extrémité de la tige (3.1) pouvant être inclinée de manière élastique d'un angle d'inclinaison (α) par rapport à l'axe longitudinal (L) et la tige (3.1) ayant un diamètre (d2) fortement réduit par rapport au diamètre (d1) de la région de fixation (2) et la région de fixation (2) présentant sur son côté tourné vers le raccord de liaison (V) des moyens (2.1), qui servent à assurer l'étanchéité, les moyens comprenant une bride (2.1) périphérique en forme de lèvre d'étanchéité sur la région de fixation (2) sur son côté ouvert opposé à la région de préhension (3).

2. Dispositif de désaccouplement hydraulique selon la revendication 1, **caractérisé en ce qu'**au moins la tige (3.1) est en une matière synthétique élastique.

3. Dispositif de désaccouplement hydraulique selon la revendication 1 ou 2, **caractérisé en ce qu'**une longueur axiale (1) de la région de préhension (3) est supérieure d'un multiple au diamètre (d2) de la tige (3.1).

4. Dispositif de désaccouplement hydraulique selon l'une des revendications 1 à 3, **caractérisé en ce que** la pièce de tête (3.2) a un diamètre (d3) formé par l'extension de diamètre de la tige (3.1).

5. Dispositif de désaccouplement hydraulique selon l'une des revendications 1 à 4, **caractérisé en ce que** le capuchon de protection (1) est à symétrie de révolution.

6. Dispositif de désaccouplement hydraulique selon l'une des revendications 1 à 5, **caractérisé en ce que** la région de fixation (2) et la région de préhension (3) sont en des matières différentes.

7. Dispositif de désaccouplement hydraulique selon l'une des revendications 1 à 6, **caractérisé en ce que** la région de fixation (2) et la région de préhension (3) sont réalisées d'une seule pièce en une matière synthétique élastique.
